# DEMANDE DE BREVET EUROPEEN

(11) **EP 4 199 547 A1**
(43) Date de publication de la demande: **21.06.2023**
(21) Numéro de dépôt: 22213570.9
(22) Date de dépôt: 14.12.2022
(51) Int. Cl.: H04W 4/02, H04W 4/40, H04W 4/44, G06Q 10/04, G06Q 50/30

(54) **TRAITEMENT DE DONNÉES PERFECTIONNÉ POUR UN COVOITURAGE EFFICACE**

(30) Priorité: 16.12.2021 FR 2113692
(71) Demandeur: Orange, 92130 Issy-les-Moulineaux (FR)
(72) Inventeur: GAILLET, Thierry, 92326 CHÂTILLON CEDEX (FR); LEROUX, Sylvain, 92326 CHATILLON CEDEX (FR); MUSSOT, Laurent, 92326 CHATILLON CEDEX (FR)
(74) Mandataire: Plasseraud IP

(57) **Abrégé**

La présente divulgation propose une détermination d'une priorité à attribuer à un véhicule, opéré par un serveur (SER) et comportant:
- collecter, depuis un réseau de communication (RES), des données d'au moins des identifiants d'équipements communicants (TER1, TER2), l'un des identifiants collecté étant associé audit véhicule (MOD),
- déterminer un nombre d'identifiants colocalisés, selon un critère de colocalisation choisi, ledit identifiant associé au véhicule étant l'un desdits identifiants colocalisés, et
* si le nombre est supérieur à un seuil, attribuer audit véhicule une première priorité, et
* si le nombre est inférieur au seuil, attribuer au véhicule une deuxième priorité, inférieure à la première priorité.

## Description

### Domaine technique

La présente divulgation relève du domaine du traitement de données dans le cadre de covoiturage.

### Technique antérieure

La limitation de l'utilisation des énergies fossiles, susceptible de produire des gaz à effet de serre, devient un enjeu majeur dans le secteur de l'automobile. Une forte croissance du recours à l'énergie électrique dans ce secteur, en remplacement des énergies fossiles, est déjà observée. Toutefois, les prévisions des besoins en matière d'énergie électrique pour les déplacements montrent que les déplacements collectifs en véhicule devront être la norme tandis que les déplacements individuels seront proscrits. Par ailleurs, le nombre croissant de véhicules sature déjà les infrastructures routières sur les grands axes.

Les solutions de covoiturage sont alors encouragées afin de réduire autant que possible le nombre de véhicules sur les routes, et réduire ainsi l'énergie sollicitée par l'ensemble de ces véhicules.

Pour organiser de telles solutions de covoiturage, il existe des applications connues pour mettre en relation un automobiliste utilisateur d'un véhicule, d'une part, et un ou plusieurs passagers occasionnels de ce véhicule. Les applications sont généralement nominatives, les passagers et l'automobiliste déclarant leur identité via l'application. La mise en relation définit en outre un point de rendez-vous pour y conduire le véhicule afin d'y accueillir le ou les passagers.

Un problème lié à de telles applications est qu'elles sont simplement déclaratives en général. Aucune vérification n'est réalisée quant à la prise en charge effective des passagers.

### Résumé

La présente divulgation vient améliorer la situation.

Elle propose à cet effet un procédé de détermination d'une priorité à attribuer à un véhicule, opéré par un serveur et comportant:
- collecter, depuis un réseau de communication, des données d'au moins des identifiants d'équipements communicants, l'un des identifiants collecté étant associé audit véhicule,
- déterminer un nombre d'identifiants colocalisés, selon un critère de colocalisation, ledit identifiant associé au véhicule étant l'un desdits identifiants colocalisés, et
- attribuer audit véhicule une priorité en fonction du nombre d'identifiants colocalisés déterminé.

On compte ainsi le nombre d'équipements communicants vérifiant ce critère de colocalisation, et en fonction du nombre d'identifiants colocalisé déterminé, ou plus précisément dans une application de covoiturage, si ce nombre est conforme à un nombre attendu et sur un trajet attendu, alors on attribue une priorité accordant un privilège au véhicule. Ainsi, une telle réalisation permet de diminuer les temps de trajet pour les véhicules embarquant un grand nombre de passagers (par exemple au-delà d'un seuil de trois passagers en plus du conducteur dans le véhicule), afin d'inciter les conducteurs de véhicule à prendre un grand nombre de passagers, favorisant ainsi le covoiturage. Dans une réalisation, attribuer audit véhicule une priorité comporte :
* si le nombre est supérieur à un seuil, attribuer audit véhicule une première priorité, et
* si le nombre est inférieur au seuil, attribuer au véhicule une deuxième priorité, inférieure à la première priorité.

On compte ainsi le nombre d'équipements communicants vérifiant ce critère de colocalisation, et si ce nombre est supérieur à un seuil, ou plus précisément dans une application de covoiturage, si ce nombre est conforme à un nombre attendu et sur un trajet attendu, alors on attribue une priorité accordant un privilège au véhicule.

Ainsi, l'une des applications possibles de la détermination du nombre de personnes dans un véhicule au sens de la présente divulgation peut être la régulation du trafic routier, favorisant en particulier les véhicules en situation de covoiturage.

Dans une réalisation, l'attribution audit véhicule d'une priorité comporte attribuer audit véhicule une route ayant ladite priorité. Ainsi, en fonction du nombre d'identifiants colocalisés déterminé, une route est attribuée au véhicule.

Par exemple, l'attribution audit véhicule d'une première ou d'une deuxième priorité comporte :
- attribuer audit véhicule une première route ou une deuxième route, les première et deuxième route ayant respectivement les première et deuxième priorités.

On entend ici par « route » aussi bien une voie d'une route, qu'un itinéraire particulier. Ainsi par exemple, la route ayant la première priorité précitée peut être par exemple une voie de gauche d'une autoroute, moins encombrée qu'une voie de droite ayant alors la deuxième priorité. Un autre exemple d'une route ayant la première priorité est une voie de télépéage sur une autoroute (plus rapide que les autres voies). En complément ou en variante, la route ayant la première priorité précitée peut être un itinéraire alternatif à un trajet empruntant une route embouteillée. Il peut s'agir en outre d'une autorisation d'emprunt d'une voie à sens inverse d'une route à double sens pour manœuvrer le dépassement d'un autre véhicule. Il peut s'agir en outre d'une priorité accordée à un carrefour ou sur un rond-point.

Selon différents modes de réalisation, les première et deuxième priorités précitées peuvent être plus généralement :
- des voies différentes,
- des itinéraires différents,
- une ouverture d'une barrière ou non,
- des traitements différents, de façon plus générale (frais de parking, d'assurance, de péage, par exemple, plus ou moins réduits selon la priorité accordée).

Ainsi, la détermination du nombre de personnes dans un véhicule peut être utilisée pour attribuer un itinéraire particulier à ce véhicule, ou être utilisée pour d'autres situations, par exemple pour commander une barrière de péage ou de parking, pour moduler les frais de parking, de péage, etc.

Dans une réalisation, le procédé peut comporter en outre :
- mettre en œuvre une intelligence artificielle pour définir des stratégies de libération et d'occupation de routes par des véhicules selon des priorités respectivement attribuées auxdits véhicules, et ce en vue d'une régulation de trafic routier favorisant le covoiturage.

La mise en œuvre de l'intelligence artificielle peut s'appuyer par exemple sur les données d'une base de connaissances répertoriant par exemple des situations similaires précédentes, d'encombrement des routes, et d'identification :
- d'une première route (succession de voies et/ou d'itinéraires) qui a été empruntée par les véhicules qui ont été les plus rapides pour atteindre leur destination, et
- d'une deuxième route qui a été empruntée par les véhicules les plus retardés avant d'atteindre leur destination.

Typiquement dans ce cas, la première route peut être retenue en mémoire comme procurant la première priorité lorsqu'elle est empruntée, et la deuxième route comme procurant la deuxième priorité.

Une telle réalisation permet la mise en œuvre d'une régulation du trafic routier, favorisant en particulier les véhicules en situation de covoiturage.

Dans une réalisation, le critère précité est déterminé par des identifiants d'équipements incluant l'identifiant associé au véhicule, et ayant :
- une même localisation,
- une même vitesse, et
- une même direction de déplacement.

On entend ici par « même localisation » le fait que les équipements identifiés sont localisés dans un rayon inférieur à un seuil, par exemple de cinq mètres.

Ainsi, dans une telle réalisation, il n'est pas besoin d'informations autres que le recensement d'identifiants d'équipements communicants vérifiant le critère précité. L'identifiant d'équipement peut être de type IMSI (« International Mobile Subscriber Identity ») par exemple pour un terminal tel qu'un smartphone, sans devoir nécessairement divulguer d'autres informations. Ainsi, typiquement l'identité des passagers n'a pas besoin d'être divulguée et l'identifiant d'équipement peut par exemple être supprimé d'une mémoire de stockage temporaire (après vérification du critère précité éventuellement une pluralité de fois successives).

Une telle réalisation résout ainsi un problème lié aux applications de covoiturage habituelles, qui sont le plus souvent nominatives (déclarant les identités des passagers) et qui contreviennent ainsi aux réglementations de protection des données privées (notamment le Règlement Général sur la Protection des Données ou « RGPD »), dès lors qu'une corrélation peut être effectuée entre l'identité de la personne et de la destination où se rend cette personne, via les données partagées que gèrent de telles applications au sens de l'art antérieur.

Une telle réalisation, au sens de la présente divulgation, est en revanche compatible avec la règlementation en matière de préservation des données privées. En effet, une mise en œuvre de ce procédé peut être « App-less » (i.e. ne nécessitant pas une application sur terminal ou autre liant tous les équipements à identifier pour la colocalisation) : le serveur précité collecte toutes les données pour vérifier cette colocalisation, en ne s'appuyant que sur les identifiants d'équipements et sans réaliser de corrélation avec des personnes disposant effectivement de tels équipements. L'avantage qui en résulte est notamment le respect de la règlementation en matière de données privées (« RGPD »).

Dans une réalisation, le procédé précité peut comporter en outre :
- répéter la détermination du nombre d'identifiants colocalisés, l'attribution de la priorité étant dynamique à chaque détermination de colocalisation.

Ainsi, la vérification des conditions de covoiturage avec l'attribution d'une priorité (telle qu'une route prioritaire) peut s'effectuer en temps réel.

Dans une réalisation, le procédé peut comporter en outre :
- en cas d'attribution précédente de priorité, et de non réception d'un des identifiants parmi les identifiants colocalisés, différer un changement d'attribution de priorité, pendant un nombre d'itérations du procédé qui peut être choisi.

En effet, il est possible que sur un tronçon du trajet du véhicule, l'un des équipements ne soit plus vu par le réseau (mis en arrêt par l'utilisateur ou ne captant plus). Dans ce cas, un traitement auprès d'un serveur recevant les données des équipements (IMSI pour un smartphone par exemple) reporte à un instant ultérieur la décision d'arrêter l'attribution d'une route privilégiée par exemple, et renouvelle répétitivement le test de colocalisation. Ainsi, dans une telle réalisation, si l'identifiant d'un équipement est « perdu » car cet équipement n'est plus « vu » par le réseau de communication, on réitère le procédé un nombre prédéterminé de fois en continuant à attribuer toutefois la première priorité au véhicule. Ainsi, si à la suite d'une réitération du procédé, l'équipement dont l'identifiant était précédemment perdu est vu à nouveau par le réseau, et continue de vérifier le critère précité, alors il peut être présumé que l'équipement « perdu » était encore embarqué dans le véhicule dans l'intervalle de temps où il n'était plus vu par le réseau, ce qui justifie l'attribution de la première priorité pendant cet intervalle de temps.

Dans une réalisation, le procédé peut comporter en outre :
- collecter des données issues de capteurs de présence d'utilisateurs dans le véhicule pour confirmer le nombre d'identifiants colocalisés déterminé.

Les capteurs de présence peuvent être par exemple des capteurs de poids sur les sièges ou des capteurs de fermeture de ceinture de sécurité ou encore des capteurs de portières ouvertes puis fermées, ou encore un nombre de visages détectés par le rétroviseur central du véhicule, ou autres.

Une telle réalisation permet alors par exemple, en cas de perte de l'identifiant d'un des équipements car plus « vu » par le réseau, de compter néanmoins la présence du même nombre de passagers dans le véhicule (même nombre de sièges occupés par exemple) d'après la remontée des données de ces capteurs vers le serveur. Plus généralement, il permet de corroborer un nombre de passagers présents dans le véhicule au nombre d'identifiants d'équipements détectés en colocalisation avec l'identifiant associé au véhicule.

Dans une réalisation complémentaire ou alternative, le procédé peut comporter :
- collecter des données issues de capteurs situés dans un environnement routier du véhicule, de présence d'utilisateurs dans le véhicule pour confirmer le nombre d'identifiants colocalisés déterminé.

Ces capteurs situés dans l'environnement routier peuvent être par exemple des caméras (à hauteur de panneaux de signalisation ou autres) capables de détecter un nombre de visages sur une image acquise (pas nécessairement d'identifier ces visages). Il peut s'agir aussi de balises de type beacon, réseaux WiFi, et/ou autres.

Dans une réalisation, le procédé peut comporter en outre :
- en cas de perte de réception par ledit réseau de communication d'au moins un des identifiants parmi les identifiants colocalisés, mettre en œuvre une plateforme coopérative entre une pluralité de réseaux de communication comprenant ledit réseau de communication et au moins un réseau de communication distinct, pour déterminer si ledit au moins un réseau de communication distinct reçoit des données dudit au moins un des identifiants parmi les identifiants colocalisés, et
- si ledit au moins un réseau de communication distinct reçoit des données dudit au moins un des identifiants parmi les identifiants colocalisés, déterminer ledit nombre d'identifiants colocalisés avec des données de localisation dudit au moins un des identifiants parmi les identifiants colocalisés, lesdites données de localisation étant fournies par ledit réseau de communication distinct.

Ainsi, dans une telle réalisation, en cas de perte d'un identifiant d'équipement qui n'est plus vu par le réseau, le procédé peut s'appuyer sur une plateforme coopérative entre plusieurs réseaux de communication, pour déterminer si au moins un autre des réseaux détecte encore l'identifiant perdu, en colocalisation avec par exemple l'identifiant associé au véhicule (ou l'un au moins des identifiants colocalisés avec l'identifiant du véhicule). Une telle réalisation permet ainsi de multiplier par autant de réseaux les chances de suivre la localisation d'un équipement.

Dans une réalisation, l'équipement communicant du véhicule comporte un module de conduite autonome du véhicule, le procédé comportant l'émission d'une consigne à destination d'un tel module pour emprunter une route qui est fonction dudit nombre d'identifiants colocalisés déterminé.

Dans une telle réalisation, le véhicule peut être en mode de conduite autonome et emprunter en temps réel la route qu'il lui est attribuée, par exemple une route dégagée si la priorité qui lui a été attribuée est élevée (la première priorité précitée par exemple)

Alternativement, dans une réalisation, l'équipement communicant du véhicule comporte un terminal comprenant une interface homme machine à disposition d'un utilisateur du véhicule (conducteur ou passager du véhicule), le procédé comportant l'émission d'un message de recommandation destiné au terminal pour proposer à l'utilisateur, via ladite interface homme machine, une recommandation d'emprunter une route qui est fonction dudit nombre d'identifiants colocalisés déterminé.

Dans cette réalisation alternative, le conducteur du véhicule, par exemple, reçoit sur son terminal (par exemple un smartphone) des recommandations de routes à emprunter, avec typiquement des routes prioritaires si les conditions de covoiturage sont remplies.

Ainsi, on entend par « identifiant associé au véhicule » aussi bien l'identifiant :
- d'un équipement communicant, dédié, intégré dans le véhicule ou en seconde monte, par exemple un équipement communicant comportant un dispositif de navigation (de type dit « GPS »),
- que d'un module de conduite autonome (i.e. pour conduire automatiquement le véhicule sans intervention du conducteur, autre qu'une surveillance),
- ou encore un identifiant de terminal à disposition du conducteur ou d'un passager quelconque du véhicule (par exemple un identifiant IMSI d'un smartphone), ce terminal pouvant lui-même exécuter une application d'aide à la conduite (par exemple une application de navigation) avec un affichage de recommandations de voies/routes à emprunter.

Selon un autre aspect, il est proposé un programme informatique comportant des instructions pour la mise en œuvre de tout ou partie d'un procédé tel que défini dans les présentes lorsque ce programme est exécuté par un processeur. Selon un autre aspect, il est proposé un support d'enregistrement non transitoire, lisible par un ordinateur, sur lequel est enregistré un tel programme.

En particulier, un tel programme informatique, outre le comptage du nombre d'identifiants par véhicule, peut mettre en œuvre une intelligence artificielle pour définir des stratégies de libération et d'occupation de routes (et/ou de voies sur des routes) par des véhicules selon des priorités assignées à ces véhicules, en fonction de situations similaires précédentes, d'encombrement des routes. Une telle réalisation permet la mise en œuvre d'une régulation de trafic routier favorisant le covoiturage.

La présente divulgation vise aussi un dispositif de détermination d'une priorité à attribuer à un véhicule. Ce dispositif peut comporter :
- une interface de communication avec un réseau de communication pour collecter des données d'au moins des identifiants d'équipements communicants, l'un des identifiants collecté étant associé à un véhicule, et
- un circuit de traitement pour déterminer un nombre d'identifiants colocalisés, selon un critère de colocalisation choisi, ledit identifiant associé au véhicule étant l'un desdits identifiants colocalisés, et pour attribuer audit véhicule une priorité en fonction du nombre d'identifiants colocalisés déterminés.

### Brève description des dessins

D'autres caractéristiques, détails et avantages apparaîtront à la lecture de la description détaillée ci-après, et à l'analyse des dessins annexés, sur lesquels :
**Fig. 1**

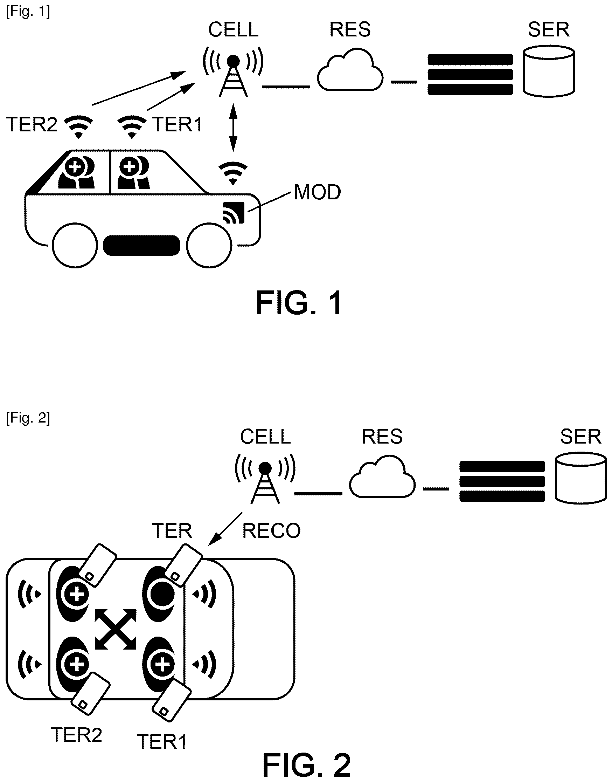

   [Fig. 1] illustre un mode de réalisation dans lequel des équipements TER1, TER2 de passagers d'un véhicule sont colocalisés avec un module communicant MOD implanté dans le véhicule.
**Fig. 2**
   [Fig. 2] illustre un mode de réalisation dans lequel des équipements TER1, TER2 de passagers d'un véhicule sont colocalisés ici avec un équipement TER à disposition du conducteur (par exemple un smartphone).
**Fig. 3**

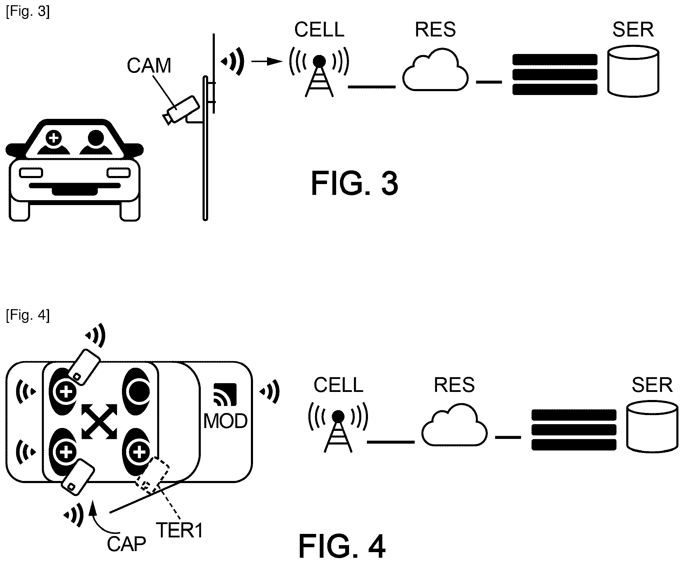

   [Fig. 3] illustre un mode de réalisation dans lequel la détection de personnes dans le véhicule est confirmée par des équipements CAM d'une infrastructure routière.
**Fig. 4**
   [Fig. 4] illustre un mode de réalisation dans lequel la détection de personnes dans le véhicule est confirmée par des capteurs CAP, de présence de passagers dans l'habitacle du véhicule, et reliés au module MOD de la figure 1.
**Fig. 5**

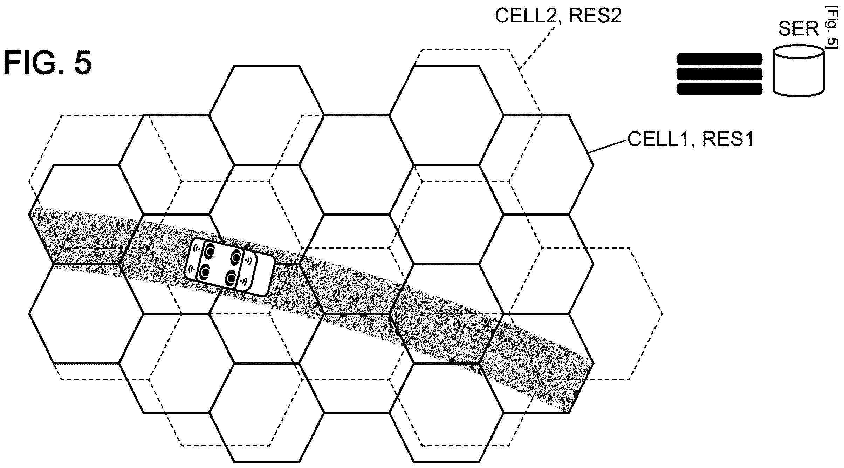

   [Fig. 5] illustre un mode de réalisation dans lequel la détection d'équipements TER1, TER2 en colocalisation peut s'effectuer par un seul ou plusieurs réseaux RES1, RES2 en collaboration.
**Fig. 6**

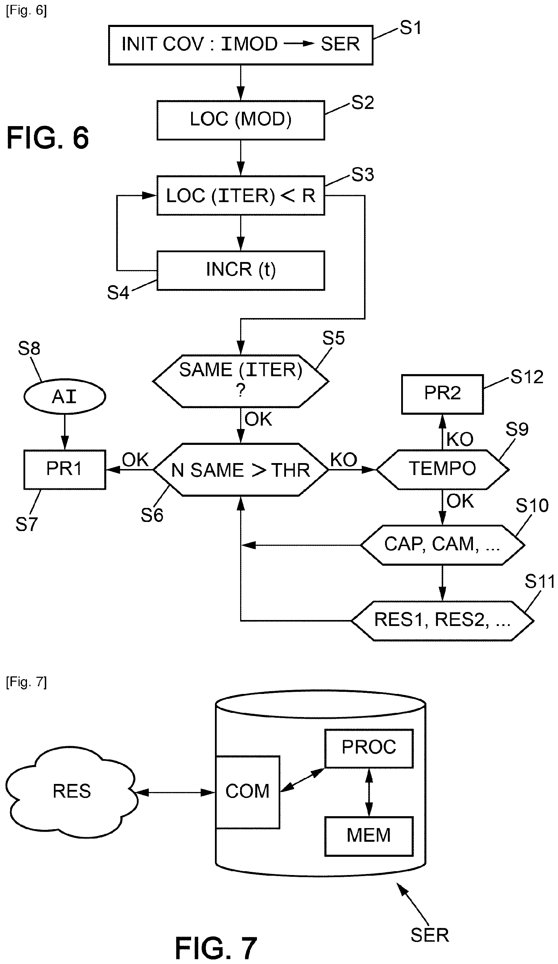

   [Fig. 6] illustre un mode de réalisation d'un exemple de procédé au sens de la présente divulgation.
**Fig. 7**
   [Fig. 7] illustre un mode de réalisation d'un exemple de dispositif pour la mise en œuvre du procédé au sens de la présente divulgation.

### Description des modes de réalisation

Il est maintenant fait référence à la figure 1. Un véhicule embarque une pluralité de passagers disposant d'équipements communicants TER1, TER2, tels que des smartphones ou tablettes, reliés à un réseau étendu RES. Dans le mode de réalisation illustré sur la figure 1, le véhicule est lui-même équipé d'un module MOD (par exemple un module de communication de type « puce GSM », éventuellement intégré à un module de conduite autonome du véhicule, ou encore à un dispositif de navigation du véhicule, ou autre). Le réseau étendu RES peut être par exemple un réseau cellulaire équipé de stations de base couvrant chacune une cellule CELL.

Le réseau RES peut détecter, dans les messages qui transitent via les stations de base, les identifiants des équipements TER1, TER2, MOD (par exemple des identifiants IMSI ou autres) et localiser ces équipements TER1, TER2, MOD en fonction de la station de base impliquée dans ces transmissions. En pratique, plusieurs stations de base peuvent intervenir par trilatération pour déterminer finement les positions de ces équipements, avec une finesse de détection inférieure à cinq mètres.

Lorsque par exemple le module MOD est actif, ce dernier MOD peut transmettre un message au serveur SER. La réception de ce message déclenche, auprès du serveur SER, l'interrogation du réseau RES, pour déterminer un nombre d'équipements TER1, TER2 identifiés comme colocalisés présentement avec le module MOD. Par exemple, les identifiants des équipements TER1, TER2, MOD sont détectés dans les messages remontant par une même station de base CELL et en outre une triangulation sur une pluralité de stations de base détermine que ces équipements se situent dans une même zone de moins de cinq mètres de rayon. Une première information de colocalisation de ces équipements TER1, TER2, MOD peut être stockée en mémoire du serveur SER. Cette étape peut être répétée à un moment ultérieur et si les mêmes équipements TER1, TER2, MOD sont à nouveaux colocalisés dans une même zone de moins de cinq mètres de rayon, le serveur SER peut déterminer que ces équipements se déplacent à la même vitesse et dans la même direction. Le serveur SER peut compter le nombre d'équipements TER1, TER2, outre le module MOD, colocalisés avec ce dernier (MOD) et déterminer que le véhicule équipé de ce module MOD est en situation de covoiturage si ce nombre est supérieur à un seuil (par exemple plus de deux passagers). Dans ce cas, le serveur SER attribue une première priorité à ce véhicule.

Dans l'exemple de la figure 1, une double flèche entre le réseau RES (via la station de base CELL) et le module MOD illustre le cas où le module MOD remonte des données au réseau, mais aussi reçoit des données du réseau RES, notamment des données pour une conduite autonome du véhicule, ou encore des données de recommandations de voies ou de routes à emprunter, par exemple affichées par un dispositif de navigation équipé d'un tel module MOD.

Sur la figure 2 est illustrée une alternative de réalisation à l'exemple présenté sur la figure 1. Dans cette alternative, le véhicule n'est pas spécifiquement équipé d'un module MOD intégré. Dans l'exemple de la figure 2, un utilisateur du véhicule comme par exemple le conducteur dispose d'un équipement communicant TER (par exemple un smartphone ou une tablette) qui peut remplacer le module MOD. Ainsi, si d'autres équipements sont colocalisés avec l'équipement TER (en nombre supérieur au seuil précité), le serveur SER peut attribuer la première priorité précitée à ce véhicule. Dans ce cas typiquement, le serveur peut transmettre au terminal TER des données de recommandation (flèche RECO de la figure 2), de voies et/ou de routes à emprunter (par exemple la voie de gauche sur une autoroute et/ou un trajet alternatif plus rapide), en lien avec cette première priorité. A cet effet, une application peut être installée sur l'équipement TER. D'ailleurs le lancement de cette même application par l'utilisateur de l'équipement TER peut déclencher l'émission d'un message depuis l'équipement TER et à destination du serveur SER pour commencer la détection de colocalisation d'équipements TER1, TER2 avec l'équipement TER.

Ainsi, les équipements TER1, TER2 en colocalisation peuvent être identifiés par interaction avec le réseau RES comme décrit en référence aux figures 1 et 2. En complément, la détection du nombre de passagers dans le véhicule peut s'effectuer par la mise en œuvre d'autres capteurs. Dans l'exemple de la figure 3, une caméra CAM par exemple peut identifier le véhicule (par sa plaque d'immatriculation par exemple) et détecter le nombre de passagers effectivement présents dans le véhicule (sans nécessairement les identifier). Le capteur ici utilisé peut être une caméra, ou encore un équipement quelconque d'une infrastructure routière, tel que par exemple des points de connexion wifi ou Bluetooth en bordure de route, ou autres. Les données que remontent de tels « capteurs » peuvent être agrégées par le serveur SER pour confirmer (ou corroborer en cas de perte passagère du réseau par un des équipements TER1, TER2) le nombre de passagers présents dans le véhicule.

En complément ou en variante d'une telle réalisation, des capteurs CAP, internes au véhicule, peuvent remonter au serveur SER, par exemple via le module MOD, des données de présence de passagers dans l'habitacle du véhicule. Une telle réalisation est illustrée à titre d'exemple sur la figure 4. De tels capteurs peuvent être par exemple des détecteurs de fermetures de portes de passagers, ou encore de ceintures de sécurité enclenchées, ou encore de poids sur des sièges de l'habitacle, ou autres. Une telle réalisation permet par exemple de confirmer encore la présence d'un passager même si le réseau RES ne détecte plus l'équipement TER1 de ce passager (en cas par exemple de perte de connexion ou de mise en mode « avion » ou simplement de smartphone éteint par exemple).

Néanmoins, alternativement ou complémentairement au recours à de tels capteurs, il est possible que le premier réseau RES1 avec lequel un équipement TER1 est habituellement connecté ne voit plus cet équipement TER1 par perte de connexion au réseau RES1, mais qu'un autre réseau RES2 (par exemple un second réseau cellulaire, ou encore un réseau Wifi avec des points de connexion multiples) parvienne encore à détecter cet équipement. La figure 5 illustre un tel mode de réalisation. Dans ce cas, le serveur SER peut solliciter une plateforme collaborative pour avoir la localisation courante de cet équipement TER1, en mode dit de « roaming ».

En référence maintenant à la figure 6 illustrant un exemple de mise en œuvre d'un procédé du type présenté ci-avant, une première étape S1 peut consister en l'initiation d'une déclaration de covoiturage par exemple par le conducteur du véhicule. A cet effet, le conducteur peut envoyer par exemple un message à partir d'un smartphone à sa disposition et à destination du serveur SER.

A l'étape S2, le serveur SER peut localiser ce smartphone ou alternativement le module MOD du véhicule (avec lequel le smartphone précité a été déclaré préalablement auprès du serveur SER, par exemple par le conducteur). Par exemple, le serveur SER peut localiser l'identifiant IMOD du module MOD (ou l'identifiant du smartphone précité) dans les données que remonte une cellule d'un réseau cellulaire du type illustré sur la figure 5.

A l'étape S3, le serveur peut localiser de la même manière des équipements se situant géographiquement dans une même zone que le module MOD, par exemple dans un rayon R (par exemple de cinq mètres) autour du module MOD. Cette étape est réitérée ultérieurement, par exemple par incrémentation d'un compteur de temps à l'étape S4. Ainsi, à l'étape S5, le serveur détermine les identifiants d'équipements ITER qui sont encore localisés dans la même zone que le module MOD. En particulier, le serveur peut vérifier à cette étape S5 que les mêmes équipements se sont déplacés à la même vitesse et dans une même direction que le module MOD, remplissant ainsi le critère de colocalisation précité.

Le serveur compte alors à l'étape S6 le nombre d'équipements ainsi colocalisés avec le module MOD. Si ce nombre est supérieur à un seuil THR (par exemple plus de deux personnes présentes dans le véhicule), alors le serveur peut déterminer que le véhicule équipé du module ayant l'identifiant IMOD est en situation de covoiturage.

Dans ce cas, le serveur peut déterminer et stocker au moins temporairement l'attribution d'une première priorité à ce véhicule à l'étape S7. Cette priorité peut consister en l'attribution d'une voie rapide sur une autoroute, ou encore d'un trajet alternatif, moins encombré, ou autres traitements privilégiés comme présenté ci-avant. Il peut s'agir en outre d'une autorisation de dépassement de véhicules plus lents, ou encore d'une priorité accordée sur un carrefour, ou pour l'entrée dans un rond-point, ou autres. Typiquement, une intelligence artificielle Al peut être mise en œuvre à l'étape S8 pour définir les meilleurs trajets et/ou routes à utiliser pour assurer une priorité à ce véhicule, relativement à d'autres véhicules.

Dans le cas d'une conduite autonome du véhicule, par exemple assurée par le module MOD, le serveur SER peut transmettre au module des données de voies/routes à emprunter, relativement à un trajet privilégié. Dans le cas où le module MOD est simplement un dispositif de navigation (de type « GPS »), le serveur SER peut transmettre des données de recommandations de voies/routes à emprunter selon ce trajet privilégié. Ces mêmes données peuvent être transmises aussi à un équipement TER tel qu'un smartphone par exemple ou une tablette, à disposition d'un utilisateur du véhicule (par exemple le conducteur ou l'un des passagers). Cet équipement affiche alors des recommandations de voies/routes proposées à l'utilisateur, comme présenté ci-avant en référence à la figure 2.

À l'étape test S6, dans le cas où le nombre de personnes dans le véhicule est inférieur ou égal au seuil THR (flèche KO en sortie du test S6), il est procédé à une temporisation à l'étape S9, avant d'attribuer une priorité plus basse que la priorité PR1, par exemple une deuxième priorité PR2 à l'étape S12 (flèche KO en sortie de la temporisation S9). Cette priorité PR2 est plus basse que la priorité PR1 en ce que, par exemple dans le cas où le véhicule est en mode de conduite autonome, ce véhicule est contraint de rester sur une voie de droite, plus lente, sur une autoroute (ou autres). Dans le cas où le véhicule n'est pas en mode de conduite autonome, la localisation du module MOD ou de l'équipement TER du conducteur par exemple peut permettre de contrôler si le véhicule respecte les contraintes liées à la priorité PR2 (si par exemple véhicule n'emprunte pas une voie/route réservée à un véhicule de première priorité PR1) pour mettre en œuvre éventuellement des sanctions (contraventions, ou autres) contre le conducteur du véhicule.

À l'étape de temporisation S9, tant que la temporisation n'est pas terminée (après par exemple une dizaine d'incréments de temps à l'étape S4), le serveur peut utiliser en outre des mesures réalisées par des capteurs CAP au sein du véhicule (par exemple de fermeture de portes, de ceintures de sécurité enclenchées, de poids sur les sièges, etc., comme présenté ci-avant en référence à la figure 4). Ces mesures peuvent être remontées au réseau étendu RES par le module MOD (ou l'équipement TER d'un passager) et être ainsi exploitées par le serveur SER à l'étape S10. Ainsi, le serveur peut déterminer, même si l'un au moins des équipements TER1 d'un passager n'est plus couvert par le réseau RES, que l'information ainsi captée confirme néanmoins que le nombre de passagers dans le véhicule est resté constant depuis le dernier test S6 et dans ce cas, la première priorité PR1 peut continuer à être attribuée à ce véhicule. De même, le serveur SER peut utiliser à l'étape S10 des données de capteurs remontées par les infrastructures routières. Ces capteurs peuvent être par exemple des bornes Wi-Fi qui bordent les routes et détectent un équipement TER1 qui n'est plus couvert temporairement par le réseau RES, ou encore des caméras CAM qui déterminent le nombre de personnes dans le véhicule, comme illustré sur la figure 3 commentée ci-avant.

En outre, toujours pendant la temporisation S9, comme présenté ci-avant en référence à la figure 5, dans le cas d'une perte de réseau RES1 par l'un des équipements TER1, cet équipement TER1 peut continuer à être « vu » par un deuxième réseau RES2 (cellulaire ou wifi). Dans ce cas, le serveur SER peut se connecter à une plateforme collaborative (en mode dit de « roaming » typiquement) afin de récupérer les données de localisation de l'identifiant de l'équipement TER1 dans le deuxième réseau RES2, à l'étape S11. En fonction de cette donnée de localisation remontée par le deuxième réseau RES2, le serveur peut déterminer encore une colocalisation des équipements dans le véhicule et, le cas échéant, déterminer que le critère de l'étape S6 est vérifié afin de continuer à attribuer la première priorité PR1 au véhicule.

Ainsi, les données collectées autrement que par la détection d'identifiants via le réseau RES1 peuvent venir confirmer la détection de colocalisation, notamment en cas de perte de réseau par l'un au moins des équipements présents dans le véhicule.

Bien entendu, cette collecte de données (issues de capteurs CAP internes au véhicule ou CAM d'infrastructure routière, ou d'autres réseaux RES2), peut être réalisée simultanément et parallèlement aux étapes S3, S5, pour confirmer éventuellement la présence du nombre de passagers détectés.

En outre, même si les remontées par les moyens CAP, CAM, RES2, etc., ne présentent pas auprès du serveur SER le nombre de passagers qui avait été déterminé aux étapes S5-S6, mais un nombre inférieur par exemple, le serveur peut attendre la fin de la temporisation de l'étape S9 avant d'attribuer effectivement la deuxième priorité PR2.

La figure 7 représente schématiquement un mode de réalisation d'un dispositif pour la mise en œuvre du procédé défini ci-avant. Un tel dispositif peut être de type serveur SER et comporter :
- une interface de communication COM avec un réseau de communication RES pour collecter des données d'au moins des identifiants d'équipements communicants, l'un des identifiants collecté étant associé à un véhicule, et
- un circuit de traitement PROC, MEM pour déterminer un nombre d'identifiants colocalisés, selon un critère de colocalisation choisi, ledit identifiant associé au véhicule étant l'un desdits identifiants colocalisés, et
   * si le nombre est supérieur à un seuil, attribuer audit véhicule une première priorité, et
   * si le nombre est inférieur au seuil, attribuer au véhicule une deuxième priorité, inférieure à la première priorité.

Typiquement, le circuit de traitement précité peut comporter un processeur PROC et une mémoire MEM, accessible par le processeur pour exécuter le procédé présenté ci-avant. Cette mémoire MEM peut stocker notamment les données de code d'instructions d'un programme informatique au sens de la présente divulgation.

## Revendications

1. Procédé de détermination d'une priorité à attribuer à un véhicule, opéré par un serveur et comportant:
- collecter, depuis un réseau de communication, des données d'au moins des identifiants d'équipements communicants, l'un des identifiants collecté étant associé audit véhicule,
- déterminer un nombre d'identifiants colocalisés, selon un critère de colocalisation, ledit identifiant associé au véhicule étant l'un desdits identifiants colocalisés, et
- attribuer audit véhicule une priorité en fonction du nombre d'identifiants colocalisés déterminé.

2. Procédé selon la revendication 1, dans lequel l'attribution audit véhicule d'une priorité comporte :
- si le nombre est supérieur à un seuil, attribuer audit véhicule une première priorité, et
- si le nombre est inférieur au seuil, attribuer au véhicule une deuxième priorité, inférieure à la première priorité.

3. Procédé selon la revendication 2, dans lequel l'attribution audit véhicule d'une première ou d'une deuxième priorité comporte :
- attribuer audit véhicule une première route ou une deuxième route, les première et deuxième route ayant respectivement les première et deuxième priorités.

4. Procédé selon l'une des revendications précédentes, comportant en outre :
- mettre en œuvre une intelligence artificielle pour définir des stratégies de libération et d'occupation de routes par des véhicules selon des priorités respectivement attribuées auxdits véhicules, en vue d'une régulation de trafic routier favorisant le covoiturage.

5. Procédé selon l'une des revendications précédentes, dans lequel le critère est déterminé par des identifiants d'équipements incluant l'identifiant associé au véhicule, et ayant :
- une même localisation,
- une même vitesse, et
- une même direction de déplacement.

6. Procédé selon l'une des revendications précédentes, comportant :
- répéter la détermination du nombre d'identifiants colocalisés, l'attribution de la priorité étant dynamique à chaque détermination de colocalisation.

7. Procédé selon l'une des revendications précédentes, comportant :
- en cas d'attribution précédente de priorité, et de non réception d'un des identifiants parmi les identifiants colocalisés, différer un changement d'attribution de priorité, pendant un nombre d'itérations du procédé.

8. Procédé selon l'une des revendications précédentes, comportant :
- collecter des données issues de capteurs de présence d'utilisateurs dans le véhicule pour confirmer le nombre d'identifiants colocalisés déterminé.

9. Procédé selon l'une des revendications précédentes, comportant :
- collecter des données issues de capteurs situés dans un environnement routier du véhicule, de présence d'utilisateurs dans le véhicule pour confirmer le nombre d'identifiants colocalisés déterminé.

10. Procédé selon l'une des revendications précédentes, comportant :
- en cas de perte de réception par ledit réseau de communication d'au moins un des identifiants parmi les identifiants colocalisés, mettre en œuvre une plateforme coopérative entre une pluralité de réseaux de communication comprenant ledit réseau de communication et au moins un réseau de communication distinct, pour déterminer si ledit au moins un réseau de communication distinct reçoit des données dudit au moins un des identifiants parmi les identifiants colocalisés, et
- si ledit au moins un réseau de communication distinct reçoit des données dudit au moins un des identifiants parmi les identifiants colocalisés, déterminer ledit nombre d'identifiants colocalisés avec des données de localisation dudit au moins un des identifiants parmi les identifiants colocalisés, lesdites données de localisation étant fournies par ledit réseau de communication distinct.

11. Procédé selon l'une des revendications précédentes, dans lequel l'équipement communicant du véhicule comporte un module de conduite autonome du véhicule, le procédé comportant l'émission d'une consigne à destination dudit module pour emprunter une route qui est fonction dudit nombre d'identifiants colocalisés déterminé.

12. Procédé selon l'une des revendications 1 à 10, dans lequel l'équipement communicant du véhicule comporte un terminal comprenant une interface homme machine à disposition d'un utilisateur du véhicule, le procédé comportant l'émission d'un message de recommandation destiné au terminal pour proposer à l'utilisateur, via ladite interface homme machine, une recommandation d'emprunter une route qui est en fonction dudit nombre identifiants colocalisés déterminé.

13. Programme informatique comportant des instructions pour la mise en œuvre du procédé selon l'une des revendications précédentes lorsque ce programme est exécuté par un processeur.

14. Support d'enregistrement non transitoire lisible par un ordinateur sur lequel est enregistré un programme pour la mise en œuvre du procédé selon l'une des revendications 1 à 12 lorsque ce programme est exécuté par un processeur.

15. Dispositif de détermination d'une priorité à attribuer à un véhicule, le dispositif comportant:
- une interface de communication avec un réseau de communication pour collecter des données d'au moins des identifiants d'équipements communicants, l'un des identifiants collecté étant associé à un véhicule, et
- un circuit de traitement pour déterminer un nombre d'identifiants colocalisés, selon un critère de colocalisation, ledit identifiant associé au véhicule étant l'un desdits identifiants colocalisés, et pour attribuer audit véhicule une priorité en fonction du nombre d'identifiants colocalisés déterminés.
